# EUROPEAN PATENT SPECIFICATION

(11) **EP 1 049 752 B1**
(45) Date of publication and mention of the grant of the patent: **07.04.2004**
(21) Application number: 99904149.4
(22) Date of filing: 20.01.1999
(51) Int. Cl.: C09K 3/10, C08F 255/02, C08F 255/04, C08F 279/02

(54) **UV CURABLE ELASTOMER COMPOSITION**
UV LICHTHÄRTBARES ELASTOMERES GEMISCH
COMPOSITION ELASTOMERE DURCISSABLE AUX UV

(30) Priority: 21.01.1998 US 72109 P
(43) Date of publication of application: 08.11.2000
(73) Proprietor: DUPONT DOW ELASTOMERS L.L.C., Wilmington, DE 19809 (US)
(72) Inventor: RUEPPING, Christian, CH-1213 Petit Lancy (CH)
(74) Representative: Carpmaels & Ransford
(86) International application number: PCT/US1999/001181
(87) International publication number: WO 1999/037731

(56) References cited:
- EP-A- 0 486 278
- DE-A- 19 541 923
- DATABASE WPI Section Ch, Week 8735 Derwent Publications Ltd., London, GB; Class A18, AN 87-245993 XP002104386 & JP 62 167385 A (HAYAKAWA GUM KK) , 23 July 1987
- DATABASE WPI Section Ch, Week 9421 Derwent Publications Ltd., London, GB; Class A18, AN 94-173985 XP002104469 & JP 06 116546 A (NICHIBAN KK) , 26 April 1994

## Description

### FIELD OF THE INVENTION

This invention relates to elastomeric compositions which are curable by exposure to ultraviolet (UV) radiation. In addition, this invention relates to a process for curing elastomeric seals rapidly, wherein the seals are formed by applying an uncured polymer composition directly onto a sealing element or a surface to be sealed.

### BACKGROUND OF THE INVENTION

Elastomeric compositions require a vulcanization, i.e. curing, step in order to develop the crosslinked network structure which confers optimum rubbery properties to such compositions. Typically, the curing processes are based on compression molding or transfer molding techniques wherein an elastomer, fully compounded with curing agent and other additives, is introduced into a mold that is then heated under pressure. The elevated temperatures used during the molding process cause chemical reaction of the elastomer and curative, thereby producing a crosslinked product. The majority of elastomeric seals manufactured on a commercial scale are cured using such processes. Generally, elastomeric seals and gaskets thus produced are manually fitted onto an article to be sealed. Alternatively, adhesives are sometimes utilized to attach the sealing member to an article. Such attachment techniques are not completely satisfactory in all cases, in particular where sealing members must be attached to thermoplastic articles.

For example, elastomeric gaskets are often utilized as sealing members for grooved parts, such as rocker covers, used in automobile engines. Such gaskets must be resistant to the effects of heat and oil. Traditionally, a cured, oil-resistant elastomer composition, such as an ethylene alkyl acrylate copolymer rubber, is manually introduced into the groove. Many automotive components are now formed from high performance thermoplastic materials, rather than from metal. Manual application of an elastomeric sealing member to a grooved thermoplastic part is a time consuming process. Further, curing the seal in place is impractical because either cure temperature or, in some cases, the post cure temperature, is usually high enough to cause deformation of the thermoplastic. Yet, if the cure temperature is lowered, cure rate is too slow. Elastomeric compositions that could be readily applied to an article or groove in their uncured state and that are adapted to low temperature curing techniques would therefore be especially useful in manufacture of thermoplastic articles having attached sealing members.

UV curing processes have been used to cure elastomers at room temperature. For example, European Patent 486278 discloses an aqueous-based UV curable coating composition which contains a latex polymer emulsion and a multi-functional (meth)acrylate. The latex polymer has an acrylate content of grater than 47 mole percent and a glass transition temperature (T_{g}) of 28°C or less. Japanese unexamined patent publication HEI 6-116546 discloses a sealant composition comprising a photocurable resin, a (meth)acrylate monomer, an organic or inorganic filler, a photohardening type sealant of either a thermoplastic resin or polyisobutylene and a photo or thermal cure initiator.

### SUMMARY OF THE INVENTION

The present invention is directed to curable, oil-resistant elastomeric ccompositions that are capable of being crosslinked at low temperatures. In particular, the present invention is directed to a thermally stable, curable elastomer composition comprising
a) 80 to 95 weight percent of an elastomer selected from the group consisting of
   i) copolymers comprising ethylene and a comonomer selected from the group consisting of C₁-C₈ alkyl esters of acrylic acid, C₁-C₈ alkyl esters of methacrylic acid, and vinyl esters of C₂-C₈ carboxylic acids;
   ii) alkyl acrylate polymers selected from the group consisting of homopolymers of C₁-C₁₀ alkyl acrylates and copolymers of C₁-C₁₀ alkyl acrylates with up to 40 weight percent monovinyl monomers; and
   iii) diene copolymers selected from the group consisting of copolymers of a diene and an unsaturated nitrile and hydrogenated copolymers of a diene and an unsaturated nitrile;
b) at least 2 weight percent of a multifunctional crosslinking agent selected from the group consisting of multifunctional acrylic crosslinking agents and multifunctional methacrylic crosslinking agents; and
c) 0.2 to 5.0 weight percent of a UV initiator
wherein the weight percentages of each of components a), b), and c) are based on the combined weight of components a), b), and c).

The invention is further directed to a process for applying a seal to an article comprising the steps of
A) blending at a temperature of between 25°C and 250°C
   a) 80-95 weight percent of an elastomer selected from the group consisting of
      i) copolymers comprising ethylene and a comonomer selected from the group consisting of C₁-C₈ alkyl esters of acrylic acid, C₁-C₈ alkyl esters of methacrylic acid, and vinyl esters of C₂-C₈ carboxylic acids;
      ii) alkyl acrylate polymers selected from the group consisting of homopolymers of C₁-C₁₀ alkyl acrylates and copolymers of C₁-C₁₀ alkyl acrylates with up to 40 weight percent monovinyl monomers; and
      iii) diene copolymers selected from the group consisting of copolymers of a diene and an unsaturated nitrile and hydrogenated copolymers of a diene and an unsaturated nitrile;
   b) at least 2 weight percent of a multifunctional crosslinking agent selected from the group consisting of multifunctional acrylic crosslinking agents and multifunctional methacrylic crosslinking agents; and
   c) 0.2 to 5.0 weight percent of a UV initiator
   wherein the weight percentages of each of components a), b), and c) are based on the combined weight of components a), b), and c), to form a thermally stable, curable, extrudable mixture;
B) depositing said extrudable mixture on said article in the shape and thickness desired to form an uncured seal; and
C) irradiating said uncured seal with UV radiation for a time sufficient to cure said seal.

The invention is further directed to a process for manufacture of elastomeric seals and gaskets comprising
A) heating the thermally stable, curable elastomer composition according to claim 1 to a temperature of from 25°C to 250°C and depositing the composition onto a substrate to form an uncured seal or gasket of a desired thickness; and
B) irradiating said uncured seal or gasket with UV radiation for a time sufficient to cure said uncured seal or gasket by reaction of the elastomer component of the elastomer composition with the multifunctional crosslinking agent of the elastomer composition to form interchain and intrachain crosslinks.

### DETAILED DESCRIPTION OF THE INVENTION

The thermally stable, curable compositions of the present invention comprise three components: an oil-resistant elastomer, a multifunctional acrylic or methacrylic crosslinking agent, and a UV initiator. The compositions are curable by the action of UV radiation, but they are thermally stable at temperatures used to process uncured elastomer formulations, e.g. in mixing or extruding operations. Such temperatures generally range from 25°C to 250°C. By thermally stable is meant that the compositions do not spontaneously form a crosslinked network, i.e. cure. That is, the viscosity of the compositions remains constant, within ± 50% of the initial value when heated to the processing temperature, as indicated by lack of a substantial increase in torque (i.e. an increase of less than 1 dNm) when subjected to the processing temperature for 30 minutes in a Moving Die Rheometer. The appropriate processing temperature will depend on the decomposition temperature of the particular UV initiator and acrylic or methacrylic crosslinking agent that is employed. However, the processing temperature must be sufficiently high so that the curable elastomer composition flows to the degree required for the end use. This will generally be from 25°C to 250°C, preferably from 90°C to 170°C. The compositions, when heated or subjected to mechanical working, such as in a screw extruder, gear pump, or piston pump, are capable of viscoelastic flow and may be metered and formed into shaped articles, such as seals. These articles may later be cured by exposure to UV radiation.

The elastomeric component of the compositions may be a raw (i.e. uncured) ethylene copolymer rubber, a raw acrylate rubber, or a raw elastomeric copolymer of a diene and an unsaturated nitrile (i.e., nitrile rubber). The ethylene copolymer rubbers useful in the practice of the invention are of two major types. The first type includes ethylene copolymers having copolymerized units of C₁-C₈ alkyl esters of acrylic acid or C₁-C₈ alkyl esters of methacrylic acid. The second type includes ethylene copolymers having copolymerized units of vinyl esters of C₂-C₈ carboxylic acids. Each of these classes of copolymers includes dipolymers or higher order copolymers having copolymerized units of other comonomers.

When the copolymers are dipolymers, the ethylene content ranges from 20-85 weight percent, preferably 30-65 weight percent. Representative examples of such compositions include copolymers of ethylene with, for example, methyl acrylate, ethyl acrylate, n-butyl acrylate, isobutyl acrylate, 2-ethylhexyl acrylate, hexyl acrylate, and copolymers of ethylene with, for example, vinyl acetate, vinyl propionate, and vinyl hexanoate. Copolymers of ethylene with, for examples, methyl methacrylate, ethyl methacrylate, isobutyl methacrylate, 2-ethylhexyl methacrylate, n-butyl methacrylate, or hexyl methacrylate may also be employed, but ethylene acrylate copolymers and ethylene vinyl ester copolymers are preferred. Methyl acrylate, n-butyl acrylate, and vinyl acetate are among the most preferred comonomers. The copolymers generally have Mooney viscosities ranging from 1-60 ML (1+4) @ 100°C, preferably 1-20 ML (1+4) @ 100°C. Blends of dipolymers may also be utilized.

Examples of higher order elastomeric copolymers of ethylene which are suitable for use as the polymeric component of the compositions of the present invention include copolymers of a) ethylene, b) alkyl acrylates, alkyl methacrylates, or vinyl esters of carboxylic acids, and c) unsaturated acids. Specific examples include terpolymers having copolymerized units of a) ethylene, b) C₁-C₈ alkyl esters of acrylic acid, C₁-C₈ alkyl esters of methacrylic acid, or vinyl esters of C₂-C₈ carboxylic acids and c) carboxylic acids of 3-12 carbon atoms selected from the group consisting of alpha, beta-unsaturated monocarboxylic acids; alpha, beta-unsaturated dicarboxylic acids; and monoesters of alpha, beta-unsaturated dicarboxylic acids. The ethylene content of the copolymers ranges from 25-70 weight percent of the polymer, preferably 35-65 weight percent, and the alpha, beta-unsaturated mono- or dicarboxylic acids or monoesters of alpha, beta-unsaturated acids are present in an amount sufficient to provide 0.1-10 weight percent, preferably 0.5-5.0 weight percent, of carboxylic acid groups. Suitable alpha, beta-unsaturated mono-or dicarboxylic acids include monocarboxylic acids such as acrylic acid and methacrylic acid; dicarboxylic acids, such as maleic acid, fumaric acid, and itaconic acid; and monoesters of dicarboxylic acids such as ethyl hydrogen maleate, ethyl hydrogen fumarate, and 2-ethylhexyl hydrogen maleate. Acrylic acid, methacrylic acid, and ethyl hydrogen maleate are preferred. The alkyl acrylate or the vinyl ester comonomers comprise 25-70 weight percent of the polymer, preferably 30-65 weight percent. Alkyl acrylates suitable for use in the polymers include C₁-C₈ alkyl esters of acrylic acid, for example, the methyl, ethyl, n-butyl, isobutyl, hexyl, and 2-ethylhexyl esters. Methyl, ethyl, and butyl acrylates are preferred. Methyl acrylate is most preferred. Vinyl esters of carboxylic acids suitable for use in the polymers include vinyl esters of carboxylic acids having 2-8 carbon atoms, for example, vinyl acetate, vinyl propionate, vinyl hexanoate, and vinyl 2-ethylhexanoate. Vinyl acetate is preferred. Mooney viscosities, ML (1+4) @ 100°C, of these copolymers generally range from 1-50, preferably 1-20. Representative examples of such copolymers include terpolymers and tetrapolymers such as ethylene/methyl acrylate/methacrylic acid copolymers; ethylene/methyl acrylate/ethyl hydrogen maleate copolymers; ethylene/acrylic acid/vinyl acetate copolymers; ethylene/butyl acrylate/acrylic acid copolymers; ethylene/vinyl acetate/methacrylic acid copolymers; ethylene/fumaric acid/methyl acrylate copolymers; ethylene/methyl acrylate/carbon monoxide/methacrylic acid copolymers; and ethylene/ethyl hydrogen maleate/carbon monoxide/vinyl acetate copolymers. Copolymer blends may also be utilized.

Another class of elastomeric ethylene copolymers suitable for use in the practice of the invention contains copolymerized units of ethylene, an acrylic ester or vinyl ester, glycidyl acrylate or methacrylate, and optionally, carbon monoxide. Generally, such compositions contain from 30-70 weight percent ethylene, 25-65 weight percent acrylic or vinyl ester, 2-10 weight percent glycidyl acrylate or methacrylate, and 0-15 weight percent carbon monoxide, the weight percentages adding up to 100 weight percent. Copolymers of ethylene, acrylate ester, and glycidyl methacrylate are preferred. Representative alkyl acrylates and alkyl acrylates that are used as comonomers include methyl acrylate, ethyl acrylate, propyl acrylate, n-butyl acrylate, isobutyl acrylate, and hexyl acrylate. Representative copolymers include ethylene/methyl acrylate/glycidyl methacrylate, ethylene/n-butyl acrylate/glycidyl methacrylate, ethylene/vinyl acetate/glycidyl methacrylate, and ethylene/methyl acrylate/carbon monoxide/glycidyl methacrylate.

A further class of elastomeric ethylene copolymers suitable for use in the practice of the invention contains copolymerized units of ethylene; vinyl acetate, a C₁-C₈ alkyl acrylate or C₁-C₈ alkyl methacrylate; and carbon monoxide or sulfur dioxide. The vinyl acetate, alkyl acrylate or alkyl methacrylate content of the copolymer is generally 20-50 weight percent and the carbon monoxide or sulfur dioxide content is generally 5-40 weight percent. Examples of such copolymers include ethylene/vinyl acetate/carbon monoxide, ethylene/n-butyl acrylate/carbon monoxide, ethylene/methyl acrylate/carbon monoxide, ethylene/ethyl hydrogen maleate/carbon monoxide/vinyl acetate.

Both the dipolymers and higher copolymers described above are generally prepared by continuous copolymerization of ethylene and the comonomers in a stirred reactor in the presence of at least one free radical initiator at temperatures of from 100°C to 300°C and at pressures of from 130 to 350 MPa generally as described in U.S. 3,883,472. Most preferably the copolymers are also prepared in the presence of 2-25 weight percent methanol or acetone so that reactor fouling is decreased or eliminated.

The elastomeric component may also be selected from the class of acrylate rubbers comprising homopolymers or copolymers of C₁-C₁₀ alkyl acrylates. Preferred alkyl acrylates include ethyl acrylate, butyl acrylate, and 2-ethylhexyl acrylate. Copolymeric acrylate rubbers contain copolymerized units of up to 40 weight percent monovinyl monomers, for example, styrene, acrylonitrile, vinylbutyl ether, acrylic acid, and C₁-C₁₀ alkyl acrylates different from the principal alkyl acrylate comonomer. Such copolymers are available commercially, for example, Hytemp® acrylate rubbers (acrylic homopolymer and copolymer rubbers available from Nippon Zeon, KK), and Toacron® AR-601 (polyethylacrylate polymers, available from Toa Paint, KK.).

Further, the elastomeric component may be a copolymer of a diene and an unsaturated nitrile. The diene may be, for example, butadiene. The nitrile is preferably acrylonitrile. Such copolymers are known as nitrile rubbers and are commercially available. They generally have acrylonitrile contents of 18-50 wt. %. Hydrogenated nitrile rubbers are also suitable for use in the compositions of the invention.

The elastomeric component of the compositions of the invention may be a blend of elastomers as well as a single elastomer. Blends wherein only one elastomer is capable of cure by exposure to UV radiation are also contemplated by the invention.

In addition to an elastomeric component, the curable compositions of the invention also include at least one multifunctional acrylic or methacrylic crosslinking agent. By multifunctional acrylic or methacrylic crosslinking agent is meant an ester that is a reaction product of a polyhydroxylic compound, generally a polyhydroxylic alcohol, and acrylic acid or methacrylic acid, wherein the crosslinking agent has at least two carbon-carbon double bonds. Such compositions are commonly referred to in the art as multifunctional acrylates or multifunctional methacrylates. Typical multifunctional acrylates and methacrylates have molecular weights of 150 to 1,000 and contain at least two polymerizable unsaturated groups per molecule.

Representative multifunctional acrylic crosslinking agents include acrylates and methacrylates such as ethylene glycol diacrylate; ethylene glycol dimethacrylate; 1,6-hexanediol diacrylate; 1,6-hexanediol dimethacrylate; 1,4-butanediol diacrylate; pentaerythritol triacrylate; pentaerythritol tetraacrylate; dipentaerythritol pentaacrylate, methoxy 1,6-hexanediolpentaerythritol triacrylate; trimethylolpropane triacrylate; tetraethylene glycol diacrylate; polymethacrylate urethanes; epoxy acrylates; polyester acrylate monomers and oligomers; trimethylolpropane propoxylate triacrylate; poly-n-butyleneoxide glycol diacrylates; and bisphenol A alkylene oxide adduct diacrylates. Trimethylolpropane triacrylate and trimethylolpropane trimethacrylate are preferred crosslinking agents because these compounds are readily available. In addition, compression set and crosslink density are enhanced in compositions containing these crosslinking agents compared to compositions containing difunctional acrylates, such as diethylene glycol dimethacrylate.

The multifunctional acrylic and methacrylic crosslinking agents are capable of homopolymerization when irradiated. Thus, when the curable compositions of the invention are exposed to UV radiation, two reactions occur simultaneously. The multifunctional crosslinking agent reacts with the elastomeric polymer component to form interchain and intrachain crosslinks, resulting in a rubber matrix. In addition, excess multifunctional crosslinking agent will homopolymerize and form an interpenetrating network which acts to reinforce the rubber matrix, much in the same manner as fillers reinforce elastomers. It is therefore possible to control the hardness of the final cured product by adjusting the proportion of multifunctional crosslinker present in the curable composition. In general, difunctional acrylates and methacrylates are less efficient crosslinking agents compared to their analogues having higher functionalities. Consequently, crosslinking agents of the class having higher functionalities are preferred for purposes of the present invention.

Elastomeric materials compounded and cured according to methods commonly used in rubber processing technology generally contain carbon black or mineral fillers as reinforcing agents. Reinforcement is reflected in properties such as hardness, modulus, and tensile strength. Generally, reinforced elastomers are characterized by non-linear stress/strain dependence. In contrast, non-reinforced elastomer compositions are characterized by an initial stress build-up at low deformation which does not substantially increase at higher deformation. Further, non-reinforced elastomer compositions tend to break at relatively low ultimate tensile strength.

Use of fillers in UV-initiated reactions would normally be expected to interfere with the UV curing process. However, the present process permits curing of translucent compositions. Reinforcement is effected simultaneously with crosslinking by formation of an interpenetrating network. The resultant product exhibits stress/strain behavior that is more linear than that of traditional elastomers which contain fillers which are not chemically bound to the elastomer matrix.

The amount of multifunctional acrylic or methacrylic crosslinking agent present in the compositions of the invention is at least 2 weight percent, based on the combined weight of polymer, multifunctional crosslinking agent, and UV initiator. Preferred compositions contain 5-20 weight percent multifunctional crosslinking agent, and most preferred compositions contain 5-15 weight percent multifunctional crosslinking agent, based on the combined weight of polymer, multifunctional crosslinking agent and UV initiator.

The third component of the curable compositions of the invention is a UV initiator. It may be selected from those organic chemical compounds conventionally employed to promote UV-initiated formation of radicals either by intramolecular homolytic bond cleavage or by intermolecular hydrogen abstraction. Such agents include organic compounds having aryl carbonyl or tertiary amino groups. Among the compounds suitable for use are benzophenone; acetophenone; benzil; benzaldehyde; o-chlorobenzaldehyde; xanthone; thioxanthone; 9,10-anthraquinone; 1-hydroxycyclohexyl phenyl ketone; 2,2-diethoxyacetophenone; dimethoxyphenylacetophenone; methyl diethanolamine; dimethylaminobenzoate; 2-hydroxy-2-methyl-1-phenylpropane-1-one; 2,2-di-sec-butoxyacetophenone; 2,2-dimethoxy-1,2-diphenylethan-1-one; benzil dimethoxyketal; benzoin methyl ether; and phenyl glyoxal. Upon exposure to UV radiation, a variety of photochemical transformations may occur, for example, the UV initiator may form free radical reactive fragments that react with the acrylate end groups of the multifunctional acrylic or methacrylic crosslinking agent. This initiates crosslinking of the polymer as well as homopolymerization of the acrylic or methacrylic crosslinking agent. A preferred UV initiator is 1-hydroxycyclohexyl phenyl ketone because of the rapidity with which it generates free radicals when exposed to UV radiation. Mixtures of UV initiators may also be used. This is often desirable because it provides more efficient production of radicals in certain cases. In general, the UV initiator will be present in an amount of 0.2 to 5.0 weight percent, based on the total weight of polymer, multifunctional crosslinking agent, and UV initiator. However, it is preferable to use between 0.5-2.5 weight percent UV initiator, most preferably 0.5-1.0 weight percent UV initiator, based on total weight of polymer, crosslinking agent and UV initiator, because high levels of photoinitiator tend to interfere with penetration and do not substantially contribute to the overall crosslink density. Those skilled in the art will recognize that there is an optimum level of photoinitiator for each particular combination of uncured gum elastomer and crosslinking agent. For example, hydrogenated nitrile rubber will generally require a higher level of photoinitiator than a copolymer of ethylene, methyl acrylate, and ethyl hydrogen maleate. Higher levels of photoinitiator increase the crosslink density at the surface of the cured composition. Low levels of photoinitiators can result in better (i.e. lower) compression sets of samples that are several millimeters thick.

In addition, for purposes of the present invention, the processing temperature must not exceed the temperature at which thermal degradtion of the UV initiator occurs. In some cases such degradation would result in scorchy compositions due to formation of free radicals. This is so because thermally-induced fragmentation of the initiator within the processing equipment can result in premature crosslinking of the elastomer. In other instances, slow curing compositions would result due to inactivation of the initiator. Degradation temperatures will differ for each particular UV initiator. Depending upon the type of rubber and the amount of additives, the processing temperature will range from between 25° and 250°C. It is an object of the invention to provide stable elastomeric compositions which can be applied to a substrate at temperatures of up to 250°C.

The elastomeric component, multifunctional acrylic or methacrylic crosslinking agent component, and UV initiator component are present in the compositions of the present invention in specific relative ratios. That is, the elastomer is present in an amount of 80-95 weight percent, based on the total weight of elastomer, crosslinking agent, and UV initiator. The multifunctional crosslinking agent is present in an amount of at least 2 weight percent, based on the total weight of elastomer, crosslinking agent, and UV initiator. Finally, the UV initiator is present in an amount of 0.2 to 5.0 weight percent based on the total weight of elastomer, crosslinking agent, and UV initiator. Preferably, the elastomeric component will be present in an amount of from 85-93 weight percent, based on the total weight of elastomer, crosslinking agent, and UV initiator. The level of crosslinker determines compression set resistance and hardness in the curable composition of the invention. If less than 2 weight percent crosslinker is present, a composition having low hardness and poor compression set resistance is formed. Greater than 30 weight percent crosslinker results in production of a composition of hardness greater than 70 Shore A. Such compositions are generally unsuitable for use in sealing, especially gasketing, applications. The particular component range selected will thus depend on the specific end use contemplated.

Various additives, commonly used in rubber compounding may be incorporated into the compositions of the present invention to modify, stabilize, and reinforce them. Preferably, such additives will be used in amounts which do not interfere substantially with the crosslinking reaction of the uncured polymeric component. For example, if large amounts of fillers that are opaque to UV light are utilized, the filled compositions will not cure evenly throughout, or only the surface of the composition will be cured. Usually, fillers may be employed in amounts of up to 15 parts per hundred parts of elastomer. Typical examples include non-black fillers such as minerals or glass fibers. Polymeric fillers of high reinforcing efficiency, such as polytetrafluoroethylene and aramid fibers may also be used, generally at low levels.

Heat and oxidation resistance of the compositions of the invention may be enhanced by incorporation of antioxidants. Generally, aromatic antioxidants are utilized, especially aromatic amines. Due to their protective action, these compounds interfere to a certain extent with the free radical crosslinking reaction initiated by UV radiation. In the absence of antioxidants, the compositions are subject to surface cracking when exposed to temperatures of 150°C for periods of several days. Among the most useful antioxidants are 4,4'-bis(α, α-dimethylbenzyl) diphenylamine and blends of 4,4'-bis(α, α-dimethylbenzyl)diphenylamine with 4-(α, α-dimethylbenzyl)diphenylamine. Hindered phenols may be employed, but they interfere more with the curing reaction than do the aromatic amines. Antioxidants are usually incorporated at a level of between 0.5-2 parts per 100 parts polymer. Other additives may also be incorporated into the compositions of the invention, for example plasticizers, adhesion promotors, flame retardants, and process aids commonly used in rubber compounding.

Small amounts of inhibitors may also be present in the compositions of the invention as a result of the presence of these additives in commercial samples of the acrylic or methacrylic crosslinking agents. The inhibitors are generally present in low amounts, for example below 1500 ppm (parts per million, based on the weight of the crosslinking agent). They act to prevent thermally induced polymerization of the crosslinking agents during storage and shipment.

The compositions of the invention are particularly suited for manufacture of elastomeric seals and gaskets using a technique known as gasketing in place. That is, a composition of the invention is heated to a temperature of 25°-250°C, preferably 90°C-170°C. The heated composition is then metered onto a substrate to form an uncured seal of a desired thickness which is then cured. Thus, the seal is formed in place directly on the object to be sealed, rather than in a separate molding step. Typically, uncured seals are formed in thicknesses of 1-15 mm, preferably in thicknesses of 2-8 mm.

Robotized hot melt equipment may be used to apply gaskets in place. In one embodiment of the process, a curable composition of the invention having a low viscosity elastomer component is introduced to a drum having a heated platen and piston. The composition, when heated, becomes soft and extrudable. It is forced out of the drum by the action of the piston, generally at relatively low pressures, typically less than 5.0 bars (i.e. 0.5 MPa). The composition is then fed by gear or piston pumping through heated tubing to an application gun fitted to a multidimensional industrial robot capable of precise and rapid metering. In this way, the composition can be introduced into a groove of a thermoplastic article that has just been produced, for example by molding. The bead of uncured elastomer in the groove solidifies rapidly as it cools and forms an uncured sealing element. This application method is suitable for low viscosity ethylene acrylic elastomers, polyacrylate rubbers, nitrile rubbers, or ethylene vinyl acetate elastomers of Mooney viscosity 1-20 ML (1+4) @ 100°C. The method permits extrusion from a drum using relatively low pressures. Continuous feeding and metering pumps are capable of handling compositions of the invention having viscosities up to 1000 Pa.s. Hot melt equipment may be used for compositions having somewhat higher viscosities, for example ML (1+4) @ 100°C = 70, by employing an extruder to introduce the composition into the heated tubing. The viscosity thereupon decreases, permitting formation of seals from the higher viscosity compositions.

In another embodiment, relatively high viscosity compositions of the invention may be formed into uncured seals by the gasketing in place technique. Instead of using hot melt equipment, screw extruders are exclusively utilized to deliver the elastomeric composition to the article to be sealed. Use of screw extruders results in relatively high energy input to the polymer compared with processes which utilize hot melt equipment. In order to minimize elastomer degradation in the extruder, the extrusion process must not cause the temperature of the compound to rise above 250°C. This generally requires slow extrusion speeds. Consequently, extrusion processes are generally slower methods of manufacture. Further, such equipment requires high investment costs. Those skilled in the art will recognize that the appropriate temperature for extrusion will be dependent on the viscosity of the uncured elastomer, the molecular weight of the uncured elastomer, the level of crosslinking agent, the decomposition temperature of the photoinitiator and the volatilization temperature of the crosslinking agent and will select a value within the range of 25°-250°C that is optimum for the particular circumstances.

In order to optimize the elastomeric properties of seals made by the above-described processes, they must be crosslinked, i.e. cured. It would be impractical to utilize a heat-activated cure system to accomplish a rapid crosslinking reaction in such processes. One would risk converting the curable composition used to form the seals to an intractable, crosslinked material during the metering step. Specifically, as the curable composition was heated or subjected to temperature elevation caused by mechanical working, the crosslinking reaction would be triggered. It would be difficult to control premature gelling (i.e. scorch) during metering. Because crosslinked compositions do not flow readily, processes which result in scorchy products are undesirable. Consequently, heterolytic cure systems, which rely on thermally-induced crosslinking reactions, are not appropriate for the present process. In addition, the most common homolytic, i.e. free radical, curing processes, which depend on thermal decomposition of peroxides, are also unsuitable for use in the present process. It has, however, been found that the compositions of the invention can be effectively cured by UV induced free radical processes.

UV cure of the elastomeric compositions of the invention may be accomplished at room temperature or at higher temperatures. For example, in certain circumstances wherein the elastomeric composition is to be used as a sealant, it may be desirable to perform a photocure immediately after application of the uncured composition to the object to be sealed. At that point, the temperature of the composition may be as high as 250°C. However, heating the curable composition is neither necessary nor particularly desirable for an effective photocure. In addition, when the compositions are used to form seals by the gasketing in place technique on thermoplastic articles, low temperature cure minimizes any possibility of degradation or thermal distortion of the thermoplastic. Further, it is not necessary to perform the UV irradiation in an inert atmosphere. The cure reaction can be conducted under atmospheric conditions with no deleterious effects.

For purposes of this invention, the wavelength spectrum of radiation used to effect the curing reaction typically corresponds to the absorption maximum of the UV initiator. This typically ranges from 200-400 nanometers. Suitable UV radiation sources include medium pressure mercury vapor lamps, electrodeless lamps, pulsed xenon lamps, and hybrid xenon/mercury vapor lamps. A preferred arrangement comprises one or more lamps together with a reflector, which diffuses the radiation evenly over the surface to be irradiated. The radiation dosage must be sufficient to cure the polymeric composition. A dosage of at least 10 joules per square centimeter, and preferably 20 joules is usually sufficient for optimum cure. The required radiation dose can be readily determined by curing small samples of the curable composition and measuring physical properties, such as tensile strength and elongation, after cure. In most instances, an acceptable degree of cure can be obtained by exposures of 30-300 seconds. Appropriate adjustments may be made depending on the power of the lamp, distribution of the output over the UV range, the thickness of the sample, as well as the type of polymeric component, level of crosslinking agent present, and level of filler present. For example, ethylene acrylate copolymer rubber containing filler would require a longer cure time than the same composition without filler.

Foaming agents may be incorporated into the curable compositions of the present invention. In such circumstances a cellular structure will be formed by exposure of the curable composition to UV radiation as a result of thermal decomposition of the foaming agent induced by simultaneous heating that occurs during exposure to UV light. This heating phenomenon may be augmented and controlled by additional external application of heat. Typical foaming agents that may be employed include p,p'-oxybisbenzenesulfonyl hydrazide, azodicarbonamides, p-toluenesulfonyl semicarbazides, dinitrosopentamethylene tetramine. Alternatively, the UV curing reaction may also be accomplished with cooling, so that curing and foaming occur sequentially, rather than simultaneously. That is, the curable composition is exposed to UV radiation with cooling, and the cured composition is then passed through a hot air tunnel to cause foaming. Closed cell structures of low specific gravity may be prepared by such processes. For example, structures with specific gravities of 0.3 g/cm³ may be obtained.

The curable elastomeric compositions of the present invention are useful in manufacture of general rubber goods and wire coating. They are most advantageously used however, in preparation of seals and gaskets used to seal thermoplastic articles, particularly those employed in automotive applications.

The invention is illustrated by the following specific embodiments wherein all parts are by weight unless otherwise indicated.

### EXAMPLES

### Example 1

A curable elastomeric composition of the invention was prepared by mixing on a rubber mill 92.5 parts of a copolymer of ethylene and methyl acrylate (ethylene content 34 wt. %, Mooney viscosity ML(1+4) @ 100°C of 8), 7.5 parts trimethylolpropane triacrylate, 0.75 parts Irgacure® 1800 photoinitiator (a mixture of 75 wt.% 1-hydroxycyclohexyl phenyl ketone and 25 wt.% bis(2,6-dimethoxybenzoyl)-2,4,4-trimethylphenylphosphine oxide, available from Ciba-Geigy, Ltd.), and 0.5 parts Naugard® 445 antioxidant (4,4'-di(α, α-dimethylbenzyl)diphenylamine, available from Uniroyal, Inc.). Uncured slabs of 6 mm thickness were shaped by molding in a mold coated with Teflon® fluoropolymer resin. The slabs were exposed for one and two minutes respectively to UV radiation from a medium pressure mercury lamp which emitted radiation of wavelength 250-400 nm at 80 watts/cm. The distance of the samples from the lamp was 10 cm. The cured samples exhibited the properties shown in Table I.

**TABLE I**

| | | |
|---|---|---|
| Length of Exposure (Minutes) | 1 | 2 |
| Hardness, Shore A Surface Facing Source | 46 | 50 |
| Hardness, Shore A Surface Away From Source | 35 | 42 |

### Example 2

A curable elastomeric composition of the invention was prepared by mixing on a rubber mill 92.5 parts of an acrylate rubber (ethyl acrylate homopolymer, Mooney viscosity ML(1+4) @ 100°C of 36, available from Nippon Zeon KK), 7.5 parts trimethylolpropane triacrylate, 0.75 parts Irgacure® 1800 photoinitiator (a mixture of 75 wt.% 1-hydroxycyclohexyl phenyl ketone and 25 wt.% bis(2,6-dimethoxybenzoyl)-2,4,4-trimethylphenylphosphine oxide, available from Ciba-Geigy), and 0.5 parts Naugard® 445 antioxidant (4,4'-di(α, α-dimethyl-benzyl)-diphenylamine, available from Uniroyal, Inc.). Uncured slabs of 6 mm thickness were shaped by molding in a mold coated with Teflon® fluoropolymer resin. The slabs were exposed for one and two minutes respectively to UV radiation from a medium pressure mercury lamp which emitted radiation of wavelength 250-400 nm at 80 watts/cm. Cure was effected on samples placed 10 cm from the lamp. The cured samples exhibited the properties shown in Table II.

**TABLE II**

| | | |
|---|---|---|
| Length of Exposure (Minutes) | 1 | 2 |
| Hardness, Shore A Surface Facing Source | 34 | 45 |
| Hardness, Shore A Surface Away From Source | 25 | 30 |

### Example 3

A curable elastomeric composition of the invention was prepared by mixing on a rubber mill 92.5 parts of a copolymer of ethylene and vinyl acetate (ethylene content 32 wt. %, Mooney viscosity ML(1+4) @ 100°C of 9), 7.5 parts trimethylolpropane triacrylate, 0.75 parts Irgacure® 1800 photoinitiator (a mixture of 75 wt.% 1-hydroxycyclohexyl phenyl ketone and 25 wt.% bis(2,6-dimethoxybenzoyl)-2,4,4-trimethylphenylphosphine oxide, available from Ciba-Geigy, Ltd.), and 0.5 parts Naugard® 445 parts antioxidant (4,4'-di(α, α-dimethylbenzyl)diphenylamine, available from Uniroyal, Inc.). Uncured slabs of 6 mm thickness were shaped by molding in a mold coated with Teflon® fluoropolymer resin. Samples of the rubber sheet were exposed for two minutes respectively to UV radiation from a medium pressure mercury lamp, which emitted radiation of from 250 nm to 400 nm at 80 watts/cm. The distance of the samples from the lamp during the curing process was 10 cm. The cured samples exhibited the properties shown in Table III.

**TABLE III**

| | |
|---|---|
| Length of Exposure (Minutes) | 2 |
| Hardness, Shore A Surface Facing Source | 45 |
| Hardness, Shore A Surface Away From Source | 36 |

### Example 4

Three curable compositions of the present invention, Samples 4A, 4B, and 4C, were prepared by mixing on a rubber mill 85 parts of a copolymer of ethylene and methyl acrylate (ethylene content 34 wt. %, Mooney viscosity ML(1+4) @ 100°C of 8) and the components shown in Table IV. Uncured slabs of 6 mm thickness were shaped by molding in a mold coated with Teflon® fluoropolymer resin. The resultant polymer slabs were exposed for 4 minutes to UV radiation from a medium pressure mercury lamp, which emitted radiation of wavelength 300-400 nm at a power of 80 W/cm. Exposure of the samples was at a distance of 10 cm from the lamp. Shore A hardness of the surface exposed to the lamp and the surface facing away from the lamp were determined for the 6 mm specimens. In addition, compression set of the cured compositions was determined according to ISO 815 on specimens died out of the 6 mm slabs. Results are shown in Table IV.

**TABLE IV**

| Sample Composition | 4A | 4B | 4C |
|---|---|---|---|
| Polymer (parts) | 85 | 85 | 85 |
| Trimethylolpropane triacrylate | 15 | --- | --- |
| Trimethylolpropane trimethacrylate | --- | 15 | --- |
| Diethyleneglycol dimethacrylate | --- | --- | 15 |
| Naugard 445 Antioxidant | 0.5 | 0.5 | 0.5 |
| Irgacure® 1800 Photoinitiator | 1 | 1 | 1 |
| Physical Properties | | | |
| Hardness, Shore A (pts) Surface Exposed to Radiation | 69 | 68 | 65 |
| Hardness, Shore A (pts) Surface Away from Source | 61 | 59 | 55 |
| Compression Set (%) 22 hours @ 150°C, 25% deflection | 25 | 30 | 90 |

### Example 5 and Comparative Example A

Three curable compositions of the present invention, Samples 5A, 5B, and 5C, were prepared by mixing on a rubber mill 100 parts of a copolymer of ethylene and methyl acrylate (ethylene content 34 wt. %, Mooney viscosity ML(1+4) @ 100°C of 8) and the components shown in Table V. Uncured slabs of 6 mm thickness were shaped by molding in a mold coated with Teflon® fluoropolymer resin. The resultant polymers were exposed for 2 minutes to UV radiation from a medium pressure mercury lamp, which emitted radiation of wavelength 250-400 nm at a power of 80 W/cm. The distance of the samples from the lamp during the curing process was 10 cm. Shore A hardness of the surface of the 6 mm slabs exposed to the lamp and the surface facing away from the lamp were determined. In addition, compression set of the cured compositions was determined according to ISO 815 on specimens died out of the 6 mm slabs. Tensile strength, modulus, and elongation at break were determined according to ISO 37 T2 on 2 mm specimens. Results are shown in Table V. For purposes of comparison, a composition was prepared which contained a peroxide cure system. This composition was also prepared in the same manner as Samples 5A-5C. The components of the composition, labeled Sample A, are shown in Table V. Sample A was press cured at 180°C for 4 minutes and physical properties of the cured composition were determined in the same manner as those of Samples 5A-5C. Compression molding of the control sample resulted in formation of blisters in the specimen and the physical properties of the sample were therefore difficult to determine.

**TABLE V**

| Sample Composition¹ | 5A | 5B | 5C | A |
|---|---|---|---|---|
| Polymer | 88 | 92.5 | 95 | 100 |
| Trimethylolpropane triacrylate | 10 | 7.5 | 5 | --- |
| Irgacure® 1800 Photoinitiator | 0.75 | 0.75 | 0.75 | --- |
| N,N'-m-Phenylenedimaleimide | --- | --- | --- | 2 |
| Peroxide² | --- | --- | --- | 5 |
| Naugard® 445 Antioxidant | 0.5 | 0.5 | 0.5 | 0.5 |
| Physical Properties | | | | |
| Time of Exposure to UV Light (Minutes) | 2 | 2 | 2 | --- |
| Press Cure @ 160°C (Minutes) | --- | --- | --- | 30 |
| Hardness, Shore A (pts) Surface Exposed to Radiation | 59 | 50 | 42 | 30 |
| Hardness, Shore A (pts) Surface Away From Source | 56 | 42 | 38 | --- |
| T_{B} (MPa)³ | 4.7 | 3.8 | 2.7 | 1.1 |
| M₁₀₀ (MPa)⁴ | 2.2 | 1.2 | 0.6 | 0.5 |
| M₂₀₀ (MPa)⁵ | 4.1 | 2.6 | 0.9 | 0.8 |
| E_{B} (%)⁶ | 250 | 317 | 450 | 250 |
| Compression Set (%) 168 hours, 150°C, 25% deflection | 25 | 33 | 38 | 85 |

| | | | | |
|---|---|---|---|---|
| ¹In parts by weight. | | | | |
| ² Bis(t-butylperoxy)diisopropylbenzene (40% on inert support). | | | | |
| ³Tensile Strength at Break | | | | |
| ⁴Modulus at 100% elongation | | | | |
| ⁵Modulus at 200% elongation | | | | |
| ⁶Elongation at break | | | | |

### Example 6

A curable elastomeric composition of the invention, Sample 6, was prepared by mixing on a rubber mill 88 parts of a copolymer of ethylene and methyl acrylate (ethylene content 34 wt. %, Mooney viscosity ML(1+4) @ 100°C of 8), 12 parts trimethylolpropane triacrylate, 0.75 parts Irgacure® 1800 photoinitiator (a mixture of 75 wt.% 1-hydroxycyclohexyl phenyl ketone and 25 wt.% bis(2,6-dimethoxybenzoyl)-2,4,4-trimethylphenylphosphine oxide, available from Ciba-Geigy, Ltd.), and 0.5 parts Naugard® 445 antioxidant (4,4'-di(α, α-dimethylbenzyl)-diphenylamine, available from Uniroyal, Inc.). Uncured slabs of 6 mm thickness and 2 mm thickness were shaped by molding in a mold coated with Teflon® fluoropolymer resin. Samples of both the 2 mm thick slabs and the 6 mm thick slabs were exposed for 240 seconds to UV radiation from a medium pressure mercury lamp, which emitted radiation of wavelength 300-400 nm at 80 watts/cm. The distance of the samples from the lamp during the curing process was 10 cm. The cured samples exhibited the hardness and compression set properties shown in Table VI. Test specimens of the cured composition were died out of the 6 mm slabs and used for compression set testing. Samples for tensile, modulus, and elongation testing were died out of the 2 mm slabs. Physical properties are shown in Table VI.

**TABLE VI**

| Composition (phr) | Sample 6 |
|---|---|
| Polymer | 88 |
| Naugard® 445 Antioxidant | 0.5 |
| Trimethylolpropane triacrylate | 12 |
| Irgacure® 1800 photoinitiator | 0.75 |
| Hardness, Shore A (6 mm thick specimens) | |
| Surface Exposed to Radiation (pts) | 63 |
| Surface Away from Source (pts) | 56 |
| Compression Set (%) | |
| 25% deflection | |
| After 170 hours in air at 150°C | 24 |
| After 500 hours in air at 150°C | 35 |
| After 1000 hours in air at 150°C | 48 |
| After 170 hours in engine oil at 150°C | 11 |
| After 500 hours in engine oil at 150°C | 24 |
| After 1000 hours in engine oil at 150°C | 45 |
| Physical Properties (2 mm thick specimens, room temperature) | |
| T_{B} (MPa) | 7.9 |
| M₁₀₀ (MPa) | 4.0 |
| E_{B} (%) | 366 |
| Hardness, Shore A (pts) | 60 |
| Physical Properties (2 mm thick specimens, aged at 150°C for 1000 hours in air) | |
| T_{B} (MPa) | 7.2 |
| M₁₀₀ (MPa) | 4.3 |
| E_{B} (%) | 337 |
| Hardness, Shore A (pts) | 63 |
| Physical Properties (2 mm thick specimens, aged at 150°C for 1000 hours in engine oil¹⁾ | |
| T_{B}, (MPa) | 7.3 |
| M₁₀₀ (MPa) | 4.9 |
| E_{B} (%) | 196 |
| Hardness, Shore A (pts) | 57 |

| | |
|---|---|
| ¹Shell Helix Plus® 10W/40 | |

### Example 7

A curable elastomeric composition of the invention, Sample 7, was prepared by mixing on a rubber mill 88 parts of a copolymer of ethylene and methyl acrylate (ethylene content 34 wt. %, Mooney viscosity ML(1+4) @ 100°C of 8), 12 parts trimethylolpropane triacrylate, 0.75 parts Irgacure® 1800 photoinitiator (a mixture of 75 wt.% 1-hydroxycyclohexyl phenyl ketone and 25 wt.% bis(2,6-dimethoxybenzoyl)-2,4,4-trimethylphenylphosphine oxide, available from Ciba-Geigy, Ltd.), and 0.5 parts Naugard® 445 antioxidant (4,4'-di(α, α-dimethylbenzyl)-diphenylamine, available from Uniroyal, Inc.). The composition was introduced to a 20 liter steel drum melter. The piston, which was maintained at a temperature of 140°C, heated and softened the composition while delivering it, at a pressure of 3.5 bars, to a gear pump which continuously fed a stream to a volumetric application gun mounted on an industrial robot. The composition was applied during a period of less than 15 seconds to the groove of a thermoplastic automobile engine cover. The groove had a total length of approximately 1.2 m. The cover was conveyed under a medium pressure mercury lamp having wavelength 250-400 nm and a power rating of 100 W/cm. The lamp was approximately 15 cm from the surface of the curable composition. Exposure was for approximately 40 seconds. The composition was sufficiently cured to exhibit a Shore A hardness of 55-60.

### Example 8

A curable elastomeric composition of the invention was prepared by mixing on a rubber mill 92.5 parts of a copolymer of butadiene and acrylonitrile (acrylonitrile content 41 wt.%; Mooney viscosity ML(1+4) @ 100°C of 80), 7.5 parts trimethylolpropane triacrylate, 0.75 parts Irgacure® 1800 photoinitiator (a mixture of 75 wt.% 1-hydroxycyclohexyl phenyl ketone and 25 wt.% bis(2,6-dimethoxybenzoyl)-2,4,4-trimethylphenylphosphine oxide, available from Ciba-Geigy, Ltd.), and 0.5 parts Naugard® 445 antioxidant (4,4'-di(α, α-dimethylbenzyl)diphenylamine, available from Uniroyal, Inc.). Uncured slabs of 2 mm and 6 mm thickness were shaped by molding in a mold coated with Teflon® fluoropolymer resin. The resultant 2 mm and 6 mm slabs were exposed for two minutes to UV radiation from a medium pressure mercury lamp (80 W/cm) that emitted radiation of wavelength 250-400 nm at a distance of 10 cm from the lamp. Shore A hardness of the surface exposed to the lamp and the surface facing away from the lamp of the 6 mm slabs were determined. Tensile strength, modulus, and elongation at break of the cured compositions died from the 2 mm slab were determined according to ISO 37 T2. Results are shown in Table VII.

**TABLE VII**

| Composition (phr) | Sample 8 |
|---|---|
| Polymer | 92.5 |
| Naugard® 445 Antioxidant | 0.5 |
| Trimethylolpropane triacrylate | 7.5 |
| Irgacure® 1800 photoinitiator | 0.75 |
| Hardness, Shore A (6 mm thick specimens) | |
| Surface Exposed to Radiation | 49 |
| Surface Away from Source (pts) | 39 |
| Physical Properties (2 mm thick specimens) | |
| T_{B} (MPa) | 1.7 |
| M₁₀₀ (MPa) | 1.1 |
| E_{B} (%) | 174 |

### Example 9

A curable elastomeric composition of the invention was prepared by mixing on a rubber mill 92.5 parts of a hydrogenated copolymer of butadiene and acrylonitrile (acrylonitrile content 33.5 wt.%; Mooney viscosity ML(1+4) @ 100°C of 70; double bond content less than 1%), 7.5 parts trimethylolpropane triacrylate, 0.75 parts Irgacure® 1800 photoinitiator (a mixture of 75 wt.% 1-hydroxy-cyclohexyl phenyl ketone and 25 wt.% bis(2,6-dimethoxybenzoyl)-2,4,4-trimethylphenylphosphine oxide, available from Ciba-Geigy, Ltd.), and 0.5 parts Naugard® 445 antioxidant (4,4'-di(α, α-dimethylbenzyl)diphenylamine, available from Uniroyal, Inc.). Uncured slabs of 2 mm and 6 mm thickness were shaped by molding in a mold coated with Teflon® fluoropolymer resin. The resultant 2 mm and 6 mm slabs were exposed for two minutes to UV radiation from a medium pressure mercury lamp which emitted radiation of wavelength 250-400 nm at a distance of 10 cm from the lamp. Shore A hardness of the surface exposed to the lamp and the surface facing away from the lamp of the 6 mm slabs were determined. Tensile strength, modulus, and elongation at break of the cured compositions died from the 2 mm slab were determined according to ISO 37 T2. Results are shown in Table VIII.

**TABLE VIII**

| Composition (phr) | Sample 9 |
|---|---|
| Polymer | 92.5 |
| Naugard® 445 Antioxidant | 0.5 |
| Trimethylolpropane triacrylate | 7.5 |
| Irgacure® 1800 photoinitiator | 0.75 |
| Hardness. Shore A (6 mm thick specimens) | |
| Surface Exposed to Radiation | 53 |
| Surface Away from Source (pts) | 39 |
| Physical Properties (2 mm thick specimens) | |
| T_{B} (MPa) | 5.8 |
| M₁₀₀ (MPa) | 1.2 |
| E_{B} (%) | 516 |

### Example 10

A curable elastomeric composition of the invention was prepared by mixing on a rubber mill 92.5 parts of Therban® XN 535C (a hydrogenated terpolymer of butadiene, acrylonitrile, and a termonomer, available from Bayer AG), 7.5 parts trimethylolpropane triacrylate, 0.75 parts Irgacure® 1800 photoinitiator (a mixture of 75 wt.% 1-hydroxycyclohexyl phenyl ketone and 25 wt.% bis(2,6-dimethoxybenzoyl)-2,4,4-trimethylphenylphosphine oxide, available from Ciba-Geigy, Ltd.), and 0.5 parts Naugard® 445 antioxidant (4,4'-di(α, α-dimethylbenzyl)diphenylamine, available from Uniroyal, Inc.). Uncured slabs of 2 mm and 6 mm thickness were shaped by molding in a mold coated with Teflon® fluoropolymer resin. The resultant 2 mm and 6 mm slabs were exposed for two minutes to UV radiation from a medium pressure mercury lamp (80 W/cm) that emitted radiation of wavelength 250-400 nm at a distance of 10 cm from the lamp. Shore A hardness of the surface exposed to the lamp and the surface facing away from the lamp of the 6 mm slabs were determined. Tensile strength, modulus, and elongation at break of the cured compositions died from the 2 mm slab were determined according to ISO 37 T2. Results are shown in Table IX.

**TABLE IX**

| Composition (phr) | Sample 10 |
|---|---|
| Polymer | 92.5 |
| Naugard® 445 Antioxidant | 0.5 |
| Trimethylolpropane triacrylate | 7.5 |
| Irgacure® 1800 photoinitiator | 0.75 |
| Hardness, Shore A (6 mm thick specimens) | |
| Surface Exposed to Radiation | 42 |
| Surface Away from Source (pts) | 36 |
| Physical Properties (2 mm thick specimens) | |
| T_{B} (MPa) | 4.6 |
| M₁₀₀ (MPa) | 1.1 |
| E_{B} (%) | 351 |

### Example 11

A curable elastomeric composition of the invention, Sample 11A, was prepared by mixing on a rubber mill 92.5 parts of a copolymer of ethylene and methyl acrylate (ethylene content 34 wt. %, Mooney viscosity ML(1+4 @ 100°C of 8), 7.5 parts pentaerythritol tetraacrylate (Sartomer 295, available from Sartomer, Inc.), 0.75 parts Irgacure® 1800 photoinitiator (a mixture of 75 wt.% 1-hydroxy-cyclohexyl phenyl ketone and 25 wt.% bis(2,6-dimethoxybenzoyl)-2,4,4-trimethylphenylphosphine oxide, available from Ciba-Geigy, Ltd.), and 0.5 parts Naugard® 445 antioxidant (4,4'-di(α, α-dimethylbenzyl)diphenylamine, available from Uniroyal, Inc.). Uncured slabs of 6 mm thickness and 2 mm thickness were shaped by molding in a mold coated with Teflon® fluoropolymer resin. Samples of the 2 mm thick slabs thick slabs were exposed for 120 seconds to UV radiation from a medium pressure mercury lamp (80 W/cm), which emitted radiation of wavelength greater than 250 nm. Samples of the 6 mm thick slabs thick slabs were similarly exposed for 240 seconds. The distance of the samples from the lamp during the curing process was 10 cm. The cured samples exhibited the hardness and compression set properties shown in Table X. Test specimens of the cured composition were died out of the 6 mm slabs and used for compression set testing. Samples for tensile, modulus, and elongation testing were died out of the 2 mm slabs. Physical properties are shown in Table X. Samples 11B, C, and D were similarly prepared using the ingredients shown in Table X. Test results for Samples are 11B-D are also shown in Table X.

**TABLE X**

| Composition (phr) | 11A | 11B | 11C | 11D |
|---|---|---|---|---|
| Polymer | 92.5 | 92.5 | 92.5 | 92.5 |
| Pentaerythritol Tetraacrylate¹ | 7.5 | 5 | | |
| Pentaerythritol Pentaacrylate² | | | 7.5 | 5 |
| Naugard® 445 Antioxidant | 0.5 | 0.5 | 0.5 | 0.5 |
| Irgacure® 1800 Photoinitiator | 0.75 | 0.75 | 0.75 | 0.75 |
| Hardness, Shore A (6mm thick specimens) | | | | |
| Surface exposed to radiation (pts) | 52 | 39 | 52 | 44 |
| Surface away from source (pts) | 45 | 37 | 46 | 39 |
| Compression Set (%) 168 | 30 | 39 | 32 | 39 |
| hours @ 150°C in air | | | | |
| Physical Properties (2mm thick specimens,)³ | | | | |
| M₁₀₀ (MPa) | 1.6 | 0.6 | 1.7 | 0.8 |
| T_{B} (MPa) | 4.3 | 2.7 | 3.9 | 3.3 |
| E_{B}(%) | 236 | 383 | 200 | 332 |
| Hardness, Shore A Surface | 50 | 40 | 50 | 43 |
| exposed to radiation (pts) | | | | |

| | | | | |
|---|---|---|---|---|
| ¹Sartomer 295 (pentaerythritol tetraacrylate, available from Sartomer, Inc. | | | | |
| ²Sartomer 399 (dipentaerythritol pentaacrylate, available from Sartomer, Inc. | | | | |
| ³Stress/strain properties measured according to ISO 37-T2 @ room temperature | | | | |

### Example 12

A curable elastomeric composition of the invention, Sample 12A, was prepared by mixing on a rubber mill 92.5 parts of Therban® A 4307 Rubber (a hydrogenated copolymer of butadiene and acrylonitrile, available from Bayer AG), 7.5 parts trimethylolpropane triacrylate, 0.75 parts Irgacure® 1800 photoinitiator (a mixture of 75 wt.% 1-hydroxycyclohexyl phenyl ketone and 25 wt.% bis(2,6-dimethoxybenzoyl)-2,4,4-trimethylphenylphosphine oxide, available from Ciba-Geigy, Ltd.), and 0.5 parts Naugard® 445 antioxidant (4,4'-di(α, α-dimethylbenzyl)-diphenylamine, available from Uniroyal, Inc.). Uncured slabs of 2 mm thickness were shaped by molding in a mold coated with Teflon® fluoropolymer resin. The resultant 2 mm slabs were exposed for four minutes to UV radiation from a medium pressure mercury lamp (80 W/cm) which emitted radiation of wavelength greater than 250 nm at a distance of 10 cm from the lamp. Shore A hardness, tensile strength, modulus, and elongation at break of the cured compositions died from the 2 mm slab were determined according to ISO 37 T2 at room temperature. Results are shown in Table XI. Two further compositions of the invention, Samples 12B and 12C, were prepared in a similar fashion using the proportion of components shown in Table XI. Test specimens were prepared as described for Sample 12 A and results are shown in Table XI.

**TABLE XI**

| Composition (phr) | Sample 12A | Sample 12B | Sample 12C |
|---|---|---|---|
| Polymer | 92.5 | 92.5 | 92.5 |
| Naugard® 445 Antioxidant | 0.5 | 0.5 | 0.5 |
| Trimethylolpropane triacrylate | 7.5 | 7.5 | 7.5 |
| Irgacure® 1800 photoinitiator | 0.75 | 1.2 | 2 |
| Physical Properties (2 mm thick specimens) | | | |
| T_{B} (MPa) | 8.5 | 6.5 | 7 |
| M₁₀₀ (MPa) | 1.5 | 1.2 | 1.3 |
| E_{B} (%) | 490 | 420 | 420 |
| Hardness Shore A | 58 | 58 | 58 |
| Surface exposed to radiation (pts) | | | |
| Compression Set (%) 168 hours @ 150°C in air | 75 | 62 | 58 |

### Example 13

A curable elastomeric composition of the invention, Sample 13, was prepared substantially in the same manner and using the same components as Sample 12B except that 92.5 parts of Therban® Rubber A 4367 (a hydrogenated copolymer of butadiene and acrylonitrile, available from Bayer AG; acrylonitrile content 43 wt.%; Mooney viscosity ML(1+4) @ 100°C of 70; double bond content 5.5%), was used in place of Therban® A 4307 as the polymer component. Uncured slabs of 2 mm thickness were shaped by molding in a mold coated with Teflon® fluoropolymer resin. The resultant 2 mm slabs were exposed for four minutes to UV radiation from a medium pressure mercury lamp (80 W/cm) that emitted radiation of wavelength greater than 250 nm at a distance of 10 cm from the lamp. Tensile strength, modulus, and elongation at break of the cured compositions died from the 2 mm slab were determined according to ISO 37 T2 at room temperature. Results are shown in Table XII. Test specimens were prepared as described for Sample 12 A and results are shown in Table XII.

**TABLE XII**

| Composition (phr) | Sample 12B | Sample 13 |
|---|---|---|
| Therban® A 4307 Rubber | 92.5 | |
| Therban® A 4367 Rubber | | 92.5 |
| Naugard® 445 Antioxidant | 0.5 | 0.5 |
| Trimethylolpropane triacrylate | 7.5 | 7.5 |
| Irgacure® 1800 photoinitiator | 1.2 | 1.2 |
| Physical Properties (2 mm thick specimens) | | |
| T_{B} (MPa) | 6.5 | 5.7 |
| M₁₀₀ (MPa) | 1.2 | 1.6 |
| E_{B} (%) | 420 | 320 |
| Hardness Shore A | 58 | 59 |
| Surface exposed to radiation (pts) | | |
| Compression Set (%) 168 hours @ | 62 | 53 |
| 150°C in air | | |

### Example 14

A curable elastomeric composition of the invention, Sample 14A, was prepared by mixing on a rubber mill 92.5 parts of Elvaloy® 742 resin modifier (a copolymer of ethylene, vinyl acetate and carbon monoxide containing 28.5 wt.% vinyl acetate units, and 9 wt.% carbon monoxide units, having a melt index of 35 g/10 minutes, available from E. I. du Pont de Nemours and Co.), 7.5 parts trimethylolpropane triacrylate, and 0.75 parts Irgacure® 1800 photoinitiator (a mixture of 75 wt.% 1-hydroxycyclohexyl phenyl ketone and 25 wt.% bis(2,6-dimethoxybenzoyl)-2,4,4-trimethylphenylphosphine oxide, available from Ciba-Geigy, Ltd.) Uncured slabs of 2 mm thickness were shaped by molding in a mold coated with Teflon® fluoropolymer resin. The resultant 2 mm slabs were exposed for two minutes to UV radiation from a mercury lamp (80 W/cm) that emitted radiation of wavelength greater than 250 nm at a distance of 10 cm from the lamp. Shore A hardness of the surface exposed to the lamp and the surface facing away from the lamp were determined. Tensile strength, modulus, and elongation at break of the cured compositions died from the 2 mm slab were determined according to ISO 37 T2. Results are shown in Table XIII. In addition, Samples 14B and 14C were prepared and tested in a similar manner. Sample 14B contained Elvaloy® HP 661 resin modifier (a copolymer of ethylene, butyl acrylate and carbon monoxide containing 29 wt.% butyl acrylate units, and 10 wt.% carbon monoxide units, having a melt index of 12 g/10 minutes, available from E. I. du Pont de Nemours and Co.) as the polymeric component. Sample 14C contained Elvaloy® AS resin modifier (a copolymer of ethylene, n-butyl acrylate and glycidyl methacrylate containing 28 wt.% n-butyl acrylate units, and 5.25 wt.% glycidyl methacrylate units, having a melt index of 12 g/10 minutes, available from E. I. du Pont de Nemours and Co.) as the polymeric component. Physical test results are shown in Table XIII.

**TABLE XIII**

| Composition | 14A | 14B | 14C |
|---|---|---|---|
| Elvaloy® 742 resin modifier | 92.5 | | |
| Elvaloy® HP 661 resin modifier | | 92.5 | |
| Elvaloy® AS resin modifier | | | 92.5 |
| Trimethylolpropane triacrylate | 7.5 | 7.5 | 7.5 |
| Irgacure® 1800 photoinitiator | 0.75 | 0.75 | 0.75 |
| Hardness, Shore A (2 mm thick specimens) | | | |
| Uncured Hardness (points) | 58 | 64 | 65 |
| Surface Exposed to Radiation (points) | 68 | 68 | 72 |
| Surface Away from Source (points) | 66 | 67 | 71 |
| Physical Properties (2 mm thick specimens) | | | |
| T_{B} (MPa) | 9.6 | 7.8 | 9.9 |
| M₁₀₀ (MPa) | 3.9 | 3.1 | 3.1 |
| E_{B} (%) | 350 | 420 | 600 |
| Compression Set, 70 hours @ 125°C | 42 | 28 | 32 |

### Example 15

A curable elastomeric composition of the invention was prepared by mixing on a rubber mill 90.3 parts of a copolymer of ethylene and methyl acrylate (ethylene content 34 wt. %, Mooney viscosity ML(1+4) @ 100°C of 8), 8.46 parts trimethylolpropane triacrylate, 0.75 parts Irgacure® 1800 photoinitiator (a mixture of 75 wt.% 1-hydroxycyclohexyl phenyl ketone and 25 wt.% bis(2,6-dimethoxybenzoyl)-2,4,4-trimethylphenylphosphine oxide, available from Ciba-Geigy, Ltd.), 0.49 parts Naugard® 445 antioxidant (4,4'-di(α, α-dimethylbenzyl)-diphenylamine, available from Uniroyal, Inc.), and 5 parts of Celogen® OT blowing agent [p,p'-oxybis(benzenesulfonyl hydrazide), available from Uniroyal, Inc.] Uncured slabs of 2 mm thickness were shaped by molding in a mold coated with Teflon® fluoropolymer resin. The slabs were exposed for 4 minutes to UV radiation from a medium pressure mercury lamp (80 W/cm) that emitted radiation of wavelength greater than 250 nm. The distance of the samples from the lamp was 10-15 cm. The temperature of the cured samples at the conclusion of UV exposure was 140°-150°C. A foam having a closed cell structure with integral skin was formed having specific gravity down to 0.3 g/cm.

## Claims

1. A thermally stable, curable elastomer composition comprising
a) 80 to 95 weight percent of an elastomer selected from the group consisting of
i) copolymers comprising ethylene and a comonomer selected from the group consisting of C₁-C₈ alkyl esters of acrylic acid, C₁-C₈ alkyl esters of methacrylic acid, and vinyl esters of C₂-C₈ carboxylic acids;
ii) alkyl acrylate polymers selected from the group consisting of homopolymers of C₁-C₁₀ alkyl acrylates and copolymers of C₁-C₁₀ alkyl acrylates with up to 40 weight percent monovinyl monomers; and
iii) diene copolymers selected from the group consisting of copolymers of a diene and an unsaturated nitrile and hydrogenated copolymers of a diene and an unsaturated nitrile;
b) at least 2 weight percent of a multifunctional crosslinking agent selected from the group consisting of multifunctional acrylic crosslinking agents and multifunctional methacrylic crosslinking agents; and
c) 0.2 to 5.0 weight percent of a UV initiator
wherein the weight percentages of each of components a), b), and c) are based on the combined weight of components a), b), and c).

2. The composition of Claim 1 wherein the elastomer is a copolymer comprising ethylene and a comonomer selected from the group consisting of C₁-C₈ alkyl esters of acrylic acid and vinyl esters of C₂-C₈ carboxylic acids.

3. The composition of Claim 2 wherein the elastomer is a copolymer of ethylene and a C₁-C₈ alkyl ester of acrylic acid.

4. The composition of Claim 3 wherein the elastomer is a copolymer of ethylene and methyl acrylate.

5. The composition of Claim 2 wherein the elastomer is a copolymer of ethylene and a vinyl ester of a C₂-C₈ carboxylic acid.

6. The composition of Claim 5 wherein the elastomer is ethylene vinyl acetate.

7. The composition of Claim 1 wherein the elastomer is a copolymer comprising
a) ethylene;
b) a comonomer selected from the group consisting of C₁-C₈ alkyl esters of acrylic acid, C₁-C₈ alkyl esters of methacrylic acid, and vinyl esters of C₂-C₈ carboxylic acids; and
c) a comonomer selected from the group consisting of carboxylic acids of 3-12 carbon atoms selected from the group consisting of alpha, beta-unsaturated monocarboxylic acids, alpha, beta-unsaturated dicarboxylic acids, and monoesters of alpha, beta-unsaturated dicarboxylic acids.

8. The composition of Claim 7 wherein the comonomer of b) is selected from the group consisting of C₁-C₈ alkyl esters of acrylic acid, and vinyl esters of C₂-C₈ carboxylic acids.

9. The composition of Claim 7 wherein component c) is a monoester of an alpha, beta-unsaturated dicarboxylic acid.

10. The composition of Claim 1 wherein the elastomer is a homopolymer of a C₁-C₁₀ alkyl acrylate.

11. The composition of Claim 1 wherein the elastomer is a copolymer of a C₁-C₁₀ alkyl acrylate with up to 40 weight percent monovinyl monomer.

12. The composition of Claim 1 wherein the elastomer is a copolymer of a diene and an unsaturated nitrile.

13. The composition of Claim 1 wherein the multifunctional crosslinking agent is a multifunctional acrylate.

14. The composition of Claim 1 wherein the multifunctional crosslinking agent is a multifunctional methacrylate.

15. The composition of Claim 1 wherein the UV initiator is a ketone.

16. A process for applying a seal to an article comprising the steps of
A) blending at a temperature of between 25°C and 250°C:
a) 80 to 95 weight percent of an elastomer selected from the group consisting of
i) copolymers comprising ethylene and a comonomer selected from the group consisting of C₁-C₈ alkyl esters of acrylic acid. C₁-C₈ alkyl esters of methacrylic acid, and vinyl esters of C₂-C₈ carboxylic acids;
ii) alkyl acrylate polymers selected from the group consisting of homopolymers of C₁-C₁₀ alkyl acrylates and copolymers of C₁-C₁₀ alkyl acrylates with up to 40 weight percent monovinyl monomers; and
iii) diene copolymers selected from the group consisting of copolymer of a diene and an unsaturated nitrile and hydrogenated copolymers of a diene and an unsaturated nitrile;
b) at least 2 weight percent of a multifunctional crosslinking agent selected from the group consisting of multifunctional acrylic crosslinking agents and multifunctional methacrylic crosslinking agents; and
c) 0.2 to 5.0 weight percent of a UV initiator
wherein the weight percentages of each of components a), b), and c) are based on the combined weight of components a), b), and c), to form a thermally stable, curable, extrudable mixture;
B) depositing said extrudable mixture on said article in the shape and thickness desired to form an uncured seal; and
C) irradiating said uncured seal with UV radiation for a time sufficient to cure said seal.

17. A process for manufacture of elastomeric seals and gaskets comprising
A) heating the thermally stable, curable elastomer composition according to claim 1 to a temperature of from 25°C to 250°C and depositing the composition onto a substrate to form an uncured seal or gasket of a desired thickness; and
B) irradiating said uncured seal or gasket with UV radiation for a time sufficient to cure said uncured seal or gasket by reaction of the elastomer component of the elastomer composition with the multifunctional crosslinking agent of the elastomer composition to form interchain and intrachain crosslinks.

18. The process of Claim 16 or 17 wherein the curable composition is heated to a temperature of 90°-170°C in step A).

19. The process of Claim 16 or 17 wherein the article is made of a thermoplastic material.

20. The process of Claim 16 or 17 wherein the elastomer is a copolymer comprising ethylene and a comonomer selected from the group consisting of C₁-C₈ alkyl esters of acrylic acid and vinyl esters of C₂-C₈ carboxylic acids.

21. The process of Claim 20 wherein the elastomer is a copolymer of ethylene and a C₁-C₈ alkyl ester of acrylic acid.

22. The process of Claim 21 wherein the elastomer is a copolymer of ethylene and methyl acrylate.

23. The process of Claim 20 wherein the elastomer is ethylene vinyl acetate.

24. The process of Claim 16 or 17 wherein the elastomer is a copolymer comprising
a) ethylene;
b) a comonomer selected from the group consisting of C₁-C₈ alkyl esters of acrylic acid, C₁-C₈ alkyl esters of methacrylic acid, and vinyl esters of C₂-C₈ carboxylic acids; and
c) a comonomer selected from the group consisting of carboxylic acids of 3-12 carbon atoms selected from the group consisting of alpha, beta-unsaturated monocarboxylic acids, alpha, beta-unsaturated dicarboxylic acids and monoesters of alpha, beta-unsaturated dicarboxylic acids.

25. The process of Claim 24 wherein component c) is a monoester of an alpha, beta-unsaturated dicarboxylic acid.

26. The process of Claim 16 or 17 wherein the elastomer is a homopolymer of a C₁-C₁₀ alkyl acrylate.

27. The process of Claim 16 or 17 wherein the elastomer is a copolymer of a C₁-C₁₀ alkyl acrylate with up to 40 weight percent monovinyl monomer.

28. The process of Claim 16 or 17 wherein the elastomer is a copolymer of a diene and an unsaturated nitrile.

29. The process of Claim 16 or 17 wherein the multifunctional crosslinking agent is a multifunctional acrylate.

30. The process of Claim 16 or 17 wherein the multifunctional crosslinking agent is a multifunctional methacrylate.

31. The process of Claim 16 or 17 wherein the UV radiation source is selected from the group consisting of medium pressure mercury vapor lamps, electrodeless lamps, pulsed xenon lamps, and hybrid xenon/mercury vapor lamps.

32. The process of Claim 16 or 17 wherein the UV radiation has a wavelength of from 200-400 nanometers.

33. The process of Claim 16 or 17 wherein UV radiation provides a radiation dose of between 10-20 joules per square centimeter.

34. The process of Claim 16 or 17 wherein the thermally stable, curable elastomer composition additionally comprises a filler.

35. A cured shaped article produced from a curable elastomer composition according to any one of Claims 1 to 15.

36. A cured shaped article according to Claim 35 wherein the shaped article is an elastomeric seal or gasket.

37. A substrate having attached thereto a cured elastomeric seal or gasket, the elastomeric seal or gasket being produced from a curable elastomer composition according to any one of Claims 1 to 15, wherein the elastomeric seal or gasket is formed in place directly on the substrate.

38. A substrate according to Claim 37 wherein the substrate is a thermoplastic article.

39. A substrate according to Claim 38 wherein the thermoplastic article is grooved.

40. A substrate according to any one of Claims 37 to 39 wherein the substrate is an automotive component.

41. A cured article produced by the process according to any one of Claims 16 to 34.

## Patentansprüche

1. Thermisch stabile, härtbare Elastomer-Zusammensetzung umfassend:
a) 80 bis 95 Gew.-% eines Elastomers, das aus der Gruppe ausgewählt ist, bestehend aus
i) Copolymeren, umfassend Ethylen und ein Comonomer, ausgewählt aus der Gruppe, die aus C₁-C₈-Alkylestern von Acrylsäure, C₁-C₈-Alkylestern von Methacrylsäure und Vinylestern von C₂-C₈-Carbonsäuren besteht;
ii) Alkylacrylat-Polymeren, ausgewählt aus der Gruppe, die aus Homopolymeren aus C₁-C₁₀-Alkylacrylaten und Copolymeren aus C₁-C₁₀-Alkylacrylaten mit bis zu 40 Gew.-% Monovinyl-Monomeren besteht und
iii) Dien-Copolymeren, ausgewählt aus der Gruppe, die aus Copolymeren aus einem Dien und einem ungesättigten Nitril und hydrierten Copolymeren aus einem Dien und einem ungesättigten Nitril besteht;
b) mindestens 2 Gew.-% eines multifunktionellen Vernetzungsmittels, ausgewählt aus der Gruppe, die aus multifunktionellen Acryl-Vernetzungsmitteln und multifunktionellen Methacryl-Vernetzungsmitteln besteht und
c) 0,2 bis 5,0 Gew.-% eines UV-Initiators,
worin die Gewichtsprozente von jeder der Komponenten a), b) und c) auf das kombinierte Gewicht von Komponenten a), b) und c) bezogen sind.

2. Zusammensetzung nach Anspruch 1, worin das Elastomer ein Copolymer ist, umfassend Ethylen und ein Comonomer, ausgewählt aus der Gruppe, die aus C₁-C₈-Alkylestern von Acrylsäure und Vinylestern von C₂-C₈-Carbonsäuren besteht.

3. Zusammensetzung nach Anspruch 2, worin das Elastomer ein Copolymer aus Ethylen und einem C₁-C₈-Alkylester von Acrylsäure ist.

4. Zusammensetzung nach Anspruch 3, worin das Elastomer ein Copolymer aus Ethylen und Methylacrylat ist.

5. Zusammensetzung nach Anspruch 2, worin das Elastomer ein Copolymer aus Ethylen und einem Vinylester einer C₂-C₈-Carbonsäure ist.

6. Zusammensetzung nach Anspruch 5, worin das Elastomer Ethylenvinylacetat ist.

7. Zusammensetzung nach Anspruch 1, worin das Elastomer ein Copolymer ist, umfassend
a) Ethylen;
b) ein Comonomer, ausgewählt aus der Gruppe, die aus C₁-C₈-Alkylestern von Acrylsäure, C₁-C₈-Alkylestern von Methacrylsäure und Vinylestern von C₂-C₈-Carbonsäuren besteht und
c) ein Comonomer, ausgewählt aus der Gruppe, die aus Carbonsäuren aus 3 - 12 Kohlenstoffatomen besteht, ausgewählt aus der Gruppe, die aus α,β-ungesättigten Monocarbonsäuren, α,β-ungesättigten Dicarbonsäuren und Monoestern von α,β-ungesättigten Dicarbonsäuren besteht.

8. Zusammensetzung nach Anspruch 7, worin das Comonomer von b) aus der Gruppe ausgewählt ist, die aus C₁-C₈-Alkylestern von Acrylsäure und Vinylestern von C₂-C₈-Carbonsäuren besteht.

9. Zusammensetzung nach Anspruch 7, worin Komponente c) ein Monoester einer α,β-ungesättigten Dicarbonsäure ist.

10. Zusammensetzung nach Anspruch 1, worin das Elastomer ein Homopolymer aus einem C₁-C₁₀-Alkylacrylat ist.

11. Zusammensetzung nach Anspruch 1, worin das Elastomer ein Copolymer aus einem C₁-C₁₀-Alkylacrylat mit bis zu 40 Gew.-% Monovinylmonomer ist.

12. Zusammensetzung nach Anspruch 1, worin das Elastomer ein Copolymer aus einem Dien und einem ungesättigten Nitril ist.

13. Zusammensetzung nach Anspruch 1, worin das multifunktionelle Vernetzungsmittel in multifunktionelles Acrylat ist.

14. Zusammesetzung nach Anspruch 1, worin das multifunktionelle Vernetzungsmittel ein multifunktionelles Methacrylat ist.

15. Zusammensetzung nach Anspruch 1, worin der UV-Initiator ein Keton ist.

16. Verfahren zum Aufbringen einer Abdichtung auf einen Gegenstand, umfassend die Schritte von:
A) Mischen bei einer Temperatur zwischen 25 °C und 250 °C
a) 80 bis 95 Gew.-% eines Elastomers, das aus der Gruppe ausgewählt ist, bestehend aus:
i) Copolymeren, umfassend Ethylen und ein Comonomer, ausgewählt aus der Gruppe, die aus C₁-C₈-Alkylestern von Acrylsäure, C₁-C₈-Alkylestern von Methacrylsäure und Vinylestern von C₂-C₈-Carbonsäuren besteht;
ii) Alkylacrylat-Polymeren, ausgewählt aus der Gruppe, die aus Homopolymeren aus C₁-C₁₀-Alkylacrylaten und Copolymeren aus C₁-C₁₀-Alkylacrylaten mit bis zu 40 Gew.-% Monovinyl-Monomeren besteht und
iii) Dien-Coplymeren, ausgewählt aus der Gruppe, die aus einem Copolymer aus einem Dien und einem ungesättigten Nitril und hydrierten Copolymeren aus einem Dien und einem ungesättigten Nitril besteht;
b) mindestens 2 Gew.-% eines multifunktionellen Vernetzungsmittels, ausgewählt aus der Gruppe, die aus multifunktionellen Acryl-Vernetzungsmitteln und multifunktionellen Methacryl-Vernetzungsmitteln besteht und
c) 0,2 bis 5,0 Gew.-% eines UV-Initiators,
worin die Gewichtsprozente von jeder der Komponenten a), b) und c) auf das kombinierte Gewicht von Komponenten a), b) und c) bezogen sind, zur Bildung eines thermisch stabilen, härtbaren, extrudierbaren Gemischs;
B) Ablagerung des extrudierbaren Gemischs auf dem Gegenstand in der gewünschten Form und Dicke zur Bildung einer ungehärteten Abdichtung und
C) Bestrahlung der ungehärteten Abdichtung mit UV-Strahlung für eine Zeitdauer, die zum Härten der Abdichtung ausreicht.

17. Verfahren zur Herstellung von elastomeren Abdichtungen und Dichtungen umfassend:
A) Erhitzen der thermisch stabilen, härtbaren Elastomer-Zusammensetzung nach Anspruch 1 auf eine Temperatur von 25 °C bis 250 °C und Ablagerung der Zusammensetzung auf einem Substrat zur Bildung einer ungehärteten Abdichtung oder Dichtung einer gewünschten Dicke und
B) Bestrahlung der ungehärteten Abdichtung oder Dichtung mit UV-Strahlung für eine Zeitdauer, die zum Härten der ungehärteten Abdichtung oder Dichtung durch Reaktion der Elastomer-Komponente der Elastomer-Zusammensetzung mit dem multifunktionellen Vernetzungsmittel der Elastomer-Zusammensetzung zur Bildung von Interketten- und Intraketten-Vernetzungen ausreicht.

18. Verfahren nach Anspruch 16 oder 17, worin die härtbare Zusammensetzung in Schritt A) auf eine Temperatur von 90 °C - 170 °C erhitzt wird.

19. Verfahren nach Anspruch 16 oder 17, worin der Gegenstand aus einem thermoplastischen Material hergestellt wird.

20. Verfahren nach Anspruch 16 oder 17, worin das Elastomer ein Copolymer ist, umfassend Ethylen und ein Comonomer, ausgewählt aus der Gruppe, die aus C₁-C₈-Alkylestern von Acrylsäure und Vinylestern von C₂-C₈-Carbonsäuren besteht.

21. Verfahren nach Anspruch 20, worin das Elastomer ein Copolymer aus Ethylen und ein C₁-C₈-Alkylester von Acrylsäure ist.

22. Verfahren nach Anspruch 21, worin das Elastomer ein Copolymer aus Ethylen und Methylacrylat ist.

23. Verfahren nach Anspruch 20, worin das Elastomer Ethylenvinylacetat ist.

24. Verfahren nach Anspruch 16 oder 17, worin das Elastomer ein Copolymer ist, umfassend:
a) Ethylen;
b) ein Comonomer, ausgewählt aus der Gruppe, die aus C₁-C₈-Alkylestern von Acrylsäure, C₁-C₈-Alkylestern von Methacrylsäure und Vinylestern von C₂-C₈-Carbonsäuren besteht und
c) ein Comonomer, ausgewählt aus der Gruppe, die aus Carbonsäuren aus 3 - 12 Kohlenstoffatomen besteht, ausgewählt aus der Gruppe, die aus α,β-ungesättigten Monocarbonsäuren, α,β-ungesättigten Dicarbonsäuren und Monoestern von α,β-ungesättigten Dicarbonsäuren besteht.

25. Verfahren nach Anspruch 24, worin Komponente c) ein Monoester einer α,β-ungesättigten Dicarbonsäure ist

26. Verfahren nach Anspruch 16 oder 17, worin das Elastomer ein Homopolymer aus einem C₁-C₁₀-Alkylacrylat ist.

27. Verfahren nach Anspruch 16 oder 17, worin das Elastomer ein Copolymer aus einem C₁-C₁₀-Alkylacrylat mit bis zu 40 Gew.-% Monovinyl-Monomer ist

28. Verfahren nach Anspruch 16 oder 17, worin das Elastomer ein Copolymer aus einem Dien und einem ungesättigten Nitril ist.

29. Verfahren nach Anspruch 16 oder 17, worin das multifunktionelle Vernetzungsmittel ein multifunktionelles Acrylat ist.

30. Verfahren nach Anspruch 16 oder 17, worin das multifunktionelle Vernetzungsmittel ein multifunktionelles Methacrylat ist.

31. Verfahren nach Anspruch 16 oder 17, worin die UV-Strahlungsquelle aus der Gruppe ausgewählt ist, die aus Quecksilberdampflampen mittleren Druckes, elektrodenlosen Lampen, gepulsten Xenonlampen und Hybrid-Xenon/Quecksilberdampflampen ist.

32. Verfahren nach Anspruch 16 oder 17, worin die UV-Strahlung eine Wellenlänge von 200 - 400 Nanometern aufweist.

33. Verfahren nach Anspruch 16 oder 17, worin die UV-Strahlung eine Strahlungsdosis zwischen 10 und 20 Joule pro Quadratzentimeter bereitstellt.

34. Verfahren nach Anspruch 16 oder 17, worin die thermisch stabile, härtbare Elastomer-Zusammensetzung zusätzlich einen Füllstoff umfasst.

35. Gehärteter, geformter Gegenstand, hergestellt aus einer härtbaren Elastomer-Zusammensetzung nach einem der Ansprüche 1 bis 15.

36. Gehärteter, geformter Gegenstand nach Anspruch 35, worin der geformte Gegenstand eine elastomere Abdichtung oder Dichtung ist.

37. Substrat mit einer gehärteten elastomeren Abdichtung oder Dichtung daran angebracht, wobei die elastomere Abdichtung oder Dichtung aus einer härtbaren elastomeren Zusammensetzung nach einem der Ansprüche 1 bis 15 hergestellt wird,
worin die elastomere Abdichtung oder Dichtung an Ort und Stelle direkt auf dem Substrat gebildet wird.

38. Substrat nach Anspruch 37, worin das Substrat ein thermoplastischer Gegenstand ist.

39. Substrat nach Anspruch 38, worin der thermoplastische Gegenstand gerillt ist

40. Substrat nach einem der Ansprüche 37 bis 39, worin das Substrat eine Kraftfahrzeugkomponente ist.

41. Gehärteter Gegenstand, der mithilfe des Verfahrens nach einem der Ansprüche 16 bis 34 hergestellt wird.

## Revendications

1. Composition élastomère, thermiquement stable, durcissable comprenant:
a) 80 à 95% en poids d'un élastomère choisi dans le groupe constitué de
i) copplymères comprenant de l'éthylène et un comonomère choisis dans le groupe constitué d'esters d'alkyle C₁-C₈ de l'acide acrylique, d'esters d'alkyle C₁-C₈ de l'acide méthacrylique, et d'esters de vinyle d'acides carboxyliques C₂-C₈;
ii) polymères d'acrylate d'alkyle choisis dans le groupe constitué d'homopolymères d'acrylate d'alkyle à C₁-C₁₀ et de copolymères d'acrylate d'alkyle à C₁-C₁₀ avec jusqu'à 40% en poids de monomères de monovinyle; et
iii) copolymères de diène choisis dans le groupe constitué de copolymères d'un diène et d'un nitrile insaturé et de copolymères hydrogénés d'un diène et d'un nitrile insaturé;
b) au moins 2% en poids d'un agent de réticulation choisi dans le groupe constitué d'agents de réticulation multifonctionnels acryliques et d'agents de réticulation multifonctionnels méthacryliques; et
c) 0,2 à 5,0% en poids d'un amorceur UV dans lequel les pourcentages en poids de chacune des composantes a), b) et c) sont basés sur le poids combiné des composantes a), b) et c).

2. Composition suivant la revendication 1, dans laquelle l'élastomère est un copolymère comprenant de l'éthylène et un comonomère choisi dans le groupe constitué d'esters d'alkyle C₁-C₈ de l'acide acrylique et d'esters de vinyle d'acides carboxyliques C₂-C₈.

3. Composition suivant la revendication 2, dans laquelle l'élastomère est un copolymère de l'éthylène et d'un ester d'alkyle C₁-C₈ de l'acide acrylique.

4. Composition suivant la revendication 3, dans laquelle l'élastomère est un copolymère de l'éthylène et d'acrylate de méthyle.

5. Composition suivant la revendication 2, dans laquelle l'élastomère est un copolymère de l'éthylène et d'un ester de vinyle de l'acide carboxylique C₂-C₈.

6. Composition suivant la revendication 5, dans laquelle l'élastomère est de l'éthylène acétate de vinyle.

7. Composition suivant la revendication 1, dans laquelle l'élastomère est un copolymère comprenant
a) de d'éthylène;
b) un comonomère choisi dans le groupe constitué d'esters d'alkyle C₁-C₈ de l'acide acrylique, d'esters d'alkyle C₁-C₈ de l'acide méthacrylique, et d'esters de vinyle d'acides carboxyliques C₂-C₈; et
c) un comonomère choisi dans le groupe constitué d'acides carboxyliques avec 3-12 atomes de carbone choisis dans le groupe constitué d'acides monocarboxyliques alpha -, bêta - insaturés, d'acides dicarboxyliques alpha -, bêta - insaturés, et de monoesters d'acides dicarboxyliques alpha -, bêta - insaturés.

8. Composition suivant la revendication 7, dans laquelle le comonomère de b) est choisi dans le groupe constitué d'esters d'alkyle C₁-C₈ de l'acide acrylique, et d'esters de vinyle d'acides carboxyliques C₂-C₈.

9. Composition suivant la revendication 7, dans laquelle la composante c) est un monoester d'un acide dicarboxylique alpha -, bêta - insaturé.

10. Composition suivant la revendication 1, dans laquelle l'élastomère est un homopolymère d'un acrylate d'alkyle C₁-C₁₀.

11. Composition suivant la revendication 1, dans laquelle l'élastomère est un copolymère d'un acrylate d'alkyle C₁-C₁₀ avec jusqu'à 40% en poids de monomère de monovinyle.

12. Composition suivant la revendication 1, dans laquelle l'élastomère est un copolymère d'un diène d'un nitrile insaturé.

13. Composition suivant la revendication 1, dans laquelle l'agent de réticulation multifonctionnel est un acrylate multifonctionnel.

14. Composition suivant la revendication 1, dans laquelle l'agent de réticulation multifonctionnel est un méthacrylate multifonctionnel.

15. Composition suivant la revendication 1, dans laquelle l'amorceur UV est une cétone.

16. Procédé pour appliquer un scellement à un article comprenant les étapes consistant à;
A) opérer un mélange à une température comprise entre 25° C et 250° C de:
a) 80 à 95% en poids d'un élastomère choisi dans le groupe constitué de
i) copolymères comprenant de l'éthylène et un comonomère choisi dans le groupe constitué d'esters d'alkyle C₁-C₈ de l'acide acrylique, d'esters d'alkyle C₁-C₈ de l'acide méthacrylique, et d'esters de vinyle d'acides carboxyliques C₂-C₈;
ii) polymères d'acrylate d'alkyle choisis dans le groupe constitué d'homopolymères d'acrylate d'alkyle C₁-C₁₀ et de copolymères d'acrylate d'alkyle C₁-C₁₀ avec jusqu'à 40% en poids de monomères de monovinyle; et
iii) copolymères de diène choisis dans le groupe constitué de copolymères d'un diène et d'un nitrile insaturé et de copolymères hydrogénés d'un diène et d'un nitrile insaturé;
b) au moins 2% en poids d'un agent de réticulation multifonctionnel choisi dans le groupe constitué d'agents de réticulation multifonctionnels acryliques et d'agents de réticulation multifonctionnels méthacryliques; et
c) 0,2 à 5,0% en poids d'un amorceur UV dans lequel les pourcentages en poids de chacune des composantes a), b) et c) sont basés sur le poids combiné des composantes a), b) et c), pour former un mélange thermiquement stable, durcissable et apte à être extrudé:
B) déposer ce mélange apte à être extrudé sur ledit article dans la configuration et l'épaisseur désirées pour former un scellement non durci; et
C) irradier ledit scellement non durci avec une radiation UV pendant une durée suffisante pour durcir ledit scellement.

17. Procédé pour la fabrication de scellements élastomères et de joints d'étanchéité consistant;
A) à chauffer une composition élastomère, thermiquement stable et durcissable conformément à la revendication 1 jusqu'à une température comprise entre 25° C et 250° C et à déposer la composition sur un substrat pour former un scellement ou un joint d'étanchéité non durcis d'une l'épaisseur désirée; et
B) à irradier ledit scellement ou joint d'étanchéité non durcis avec une radiation UV pendant une durée suffisante pour durcir ledit scellement ou joint d'étanchéité non durcis par une réaction de la composante élastomère de la composition élastomère avec l'agent de réticulation multifonctionnel de la composition élastomère pour former des réticulations interchaînes et intrachaînes.

18. Procédé suivant la revendication 16 ou 17, dans lequel la composition durcissable est chauffée à une température comprise entre 90° C et 170° C au cours de l'étape A).

19. Procédé suivant la revendication 16 ou 17, dans lequel l'article est fait d'un matériau thermoplastique.

20. Procédé suivant la revendication 16 ou 17, dans lequel l'élastomère est un copolymère comprenant de l'éthylène et un comonomère choisis dans le groupe constitué d'esters d'alkyle C₁-C₈ de l'acide acrylique, et d'esters de vinyle d'acides carboxyliques C₂-C₈.

21. Procédé suivant la revendication 20, dans lequel l'élastomère est un copolymère de l'éthylène et d'un ester d'alkyle C₁-C₈ de l'acide acrylique.

22. Procédé suivant la revendication 21, dans lequel l'élastomère est un copolymère d'éthylène et d'acrylate de méthyle.

23. Procédé suivant la revendication 20, dans lequel l'élastomère est de l'éthylène d'acétate de vinyle.

24. Procédé suivant la revendication 16 ou 17, dans lequel l'élastomère est un copolymère comprenant
a) de d'éthylène;
b) un comonomère choisi dans le groupe constitué d'esters d'alkyle C₁-C₈ de l'acide acrylique, d'esters d'alkyle C₁-C₈ de l'acide méthacrylique, et d'esters de vinyle d'acides carboxyliques C₂-C₈; et
c) un comonomère choisi dans le groupe constitué d'acides carboxyliques avec 3-12 atomes de carbone choisis dans le groupe constitué d'acides monocarboxyliques alpha -, bêta - insaturés, d'acides dicarboxyliques alpha -, bêta - insaturés et de monoesters d'acides dicarboxyliques alpha -, bêta - insaturés.

25. Procédé suivant la revendication 24, dans lequel la composante c) est un monoesters d'un acide dicarboxylique alpha -, bêta - insaturé.

26. Procédé suivant la revendication 16 ou 17, dans lequel l'élastomère est un homopolymère d'un acrylate d'alkyle à C₁-C₁₀.

27. Procédé suivant la revendication 16 ou 17, dans lequel l'élastomère est un copolymère d'un acrylate d'alkyle C₁-C₁₀ avec jusqu'à 40% en poids de monomère de monovinyle.

28. Procédé suivant la revendication 16 ou 17, dans lequel l'élastomère est un copolymère avec un diène et un nitrile insaturé.

29. Procédé suivant la revendication 16 ou 17, dans lequel l'agent de réticulation multifonctionnel est un acrylate multifonctionnel.

30. Procédé suivant la revendication 16 ou 17, dans lequel l'agent de réticulation multifonctionnel est un méthacrylate multifonctionnel.

31. Procédé suivant la revendication 16 ou 17, dans lequel la source de radiation UV est choisie dans le groupe consistant en des lampes à vapeur de mercure à moyenne pression, des lampes sans électrodes, des lampes pulsées au xénon, et des lampes à vapeur hybrides xénon / mercure.

32. Procédé suivant la revendication 16 ou 17, dans lequel la source de radiation UV possède une longueur d'onde allant de 200 à 400 nanomètres.

33. Procédé suivant la revendication 16 ou 17, dans lequel la source de radiation UV fournit une dose de radiation qui se situe entre 10 et 20 joules par centimètre carré.

34. Procédé suivant la revendication 16 ou 17, dans lequel la composition élastomère, thermiquement stable et durcissable comporte en surplus une matière de remplissage.

35. Article durci, façonné produit à partir d'une composition élastomère durcissable suivant une quelconque des revendications 1 à 15.

36. Article durci, façonné suivant la revendication 35, dans lequel l'article façonné est un scellement ou un joint d'étanchéité.

37. Substrat qui possède, attaché à lui, un scellement ou un joint d'étanchéité en élastomère durci, le scellement ou le joint d'étanchéité en élastomère étant produit à partir d'une composition élastomère durcissable suivant une quelconque des revendications 1 à 15, dans lequel le scellement ou le joint d'étanchéité en élastomère est produit directement en place sur le substrat.

38. Substrat suivant la revendication 37, dans lequel le substrat est un article thermoplastique.

39. Substrat suivant la revendication 38, dans lequel l'article thermoplastique est rainuré.

40. Substrat suivant une quelconque des revendication 37 à 39, dans lequel le substrat est une composante pour automobile.

41. Article durci produit par le procédé suivant une quelconque des revendication 16 à 34.
